# EUROPEAN PATENT SPECIFICATION

(11) **EP 3 141 401 B1**
(45) Date of publication and mention of the grant of the patent: **25.12.2019**
(21) Application number: 16185350.2
(22) Date of filing: 23.08.2016
(51) Int. Cl.: B60B 1/04, B60B 27/02, B60B 27/04

(54) **SPOKE WHEEL**
SPEICHENRAD
ROUE À RAYONS

(30) Priority: 11.09.2015 JP 2015180080
(43) Date of publication of application: 15.03.2017
(73) Proprietor: Honda Motor Co., Ltd., Minato-ku Tokyo 107-8556 (JP)
(72) Inventor: TERANISHI, Mafumi, Wako-shi, Saitama 351-0193 (JP)
(74) Representative: Dehns

(56) References cited:
- JP-A- H02 106 401
- JP-U- S6 246 202
- US-A1- 2012 274 126

## Description

The present invention relates to a spoke wheel for a motorcycle.

In a spoke wheel, a part for locking spokes has to be provided in a hub. Further, in a wheel for a motorcycle, a damper member arranged between the sprocket and the hub is used to absorb shocks at times of acceleration and deceleration, and a part for locking the spokes has to be provided while securing a housing space for the damper member in the hub. Japanese Patent Laid-Open No. 2015-063188 discloses a spoke wheel in which a wall for fixing the spokes is formed at the outermost periphery of the hub as the part for locking the spokes.

However, in cases where the wall for fixing the spokes is formed at the outermost periphery of the hub as in Japanese Patent Laid-Open No. 2015-063188, the hub tends to increase in size. Further, since the perimeter is long at the outermost periphery of the hub, the total length of the spoke fixation wall is necessarily long, and that works as a factor increasing the weight of the hub.

An alternative form of spoke wheel is disclosed in JP H02-106401.

It is an object of at least the preferred embodiments of the present invention to achieve downsizing and weight reduction of the hub.

According to a first aspect of the present invention, there is provided a spoke wheel for a motorcycle, comprising: a hub having an insertion hole for an axle shaft to be inserted therein; a rim for a tyre to be attached thereto; and a plurality of spokes connecting the hub and the rim, wherein the spokes include first spokes extending from a first side of the hub in an axial direction of the insertion hole to the rim, and second spokes extending from a second side of the hub in the axial direction to the rim, wherein a housing part housing damper members is formed on the first side of the hub to surround the insertion hole, the housing part including an opening part open to the first side, a bottom surface formed to be recessed from the opening part in the axial direction, and a damper-side wall part forming the bottom surface, characterized in that the bottom surface includes a flat surface, depressed parts recessed from the flat surface in the axial direction to house heads of the first spokes, and through holes formed in the depressed parts to allow the first spokes to be inserted therein.

In this arrangement, the damper members and the heads are arranged side by side in the axial direction, the heads of the first spokes can be positioned on the axle shaft's side, and downsizing and weight reduction of the hub can be achieved. Further, high mounting rigidity of the first spokes can be secured while achieving weight reduction of the hub by using the depressed parts as thinned parts.

Preferably, a position regulation part for regulating a position of the damper member is formed between adjacent ones of the depressed parts, and the position regulation part is on the same plane as the flat surface.

This allows the damper member to be positioned more consistently with respect to the bottom surface, and the falling over of the damper member toward a depressed part can be prevented. Further, the position regulation part functions as a rib formed between adjacent depressed parts, and thus the housing part can be reinforced while reducing the weight by the thinning.

Preferably, the hub includes a disk mounting part formed on the second side to allow a brake disk to be fixed thereto and a central part situated between the housing part and the disk mounting part; an external surface of the damper-side wall part forms a damper-side tapered surface whose diameter increases from the central part toward the first side; an external surface of the disk mounting part includes a disk-side tapered surface whose diameter increases from the central part toward the second side; and through holes for the second spokes to be inserted therein are formed through the disk-side tapered surface.

With this arrangement, the first spokes and the second spokes can be arranged symmetrically in the axial direction, by which the maintainability and the external appearance can be improved.

In a preferred form, the first spokes are connected from the damper-side tapered surface to the rim while leaning toward the second side, and the second spokes are connected from the disk-side tapered surface to the rim while leaning toward the first side.

This allows the clearance between the external surface of the hub and the first spokes or the clearance between the external surface of the hub and the second spokes to be made wider, and thus the maintainability can be improved while also facilitating visual recognition of the spokes and improving the external appearance.

Preferably, partition members are provided between the depressed parts and the damper members.

Thus, foreign matter entering the housing part from the outside via the through holes is prevented from contacting the damper members, by which deterioration in the durability of the damper members can be prevented.

A preferred embodiment of the invention will now be described by way of example only and with reference to the accompanying drawings, in which:
Figs. 1(A) and 1(B) are a first side view and a second side view of a spoke wheel according to an embodiment of the present invention;
Fig. 2 is a cross-sectional view of the spoke wheel taken along the line I-I in Fig. 1(A);
Fig. 3 is an external view of a hub;
Fig. 4 is a cross-sectional view of the hub to which parts have been attached, taken along the line II-II in Fig. 3;
Fig. 5 is a first side view of the hub illustrated in Fig. 3; and
Fig. 6 is a first side view of the hub illustrated in Fig. 3 equipped with damper members.

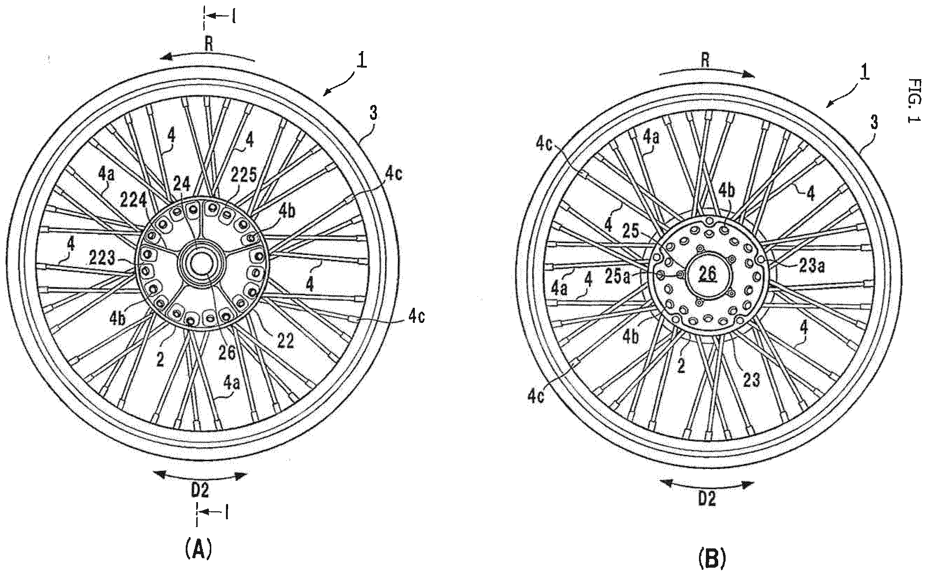

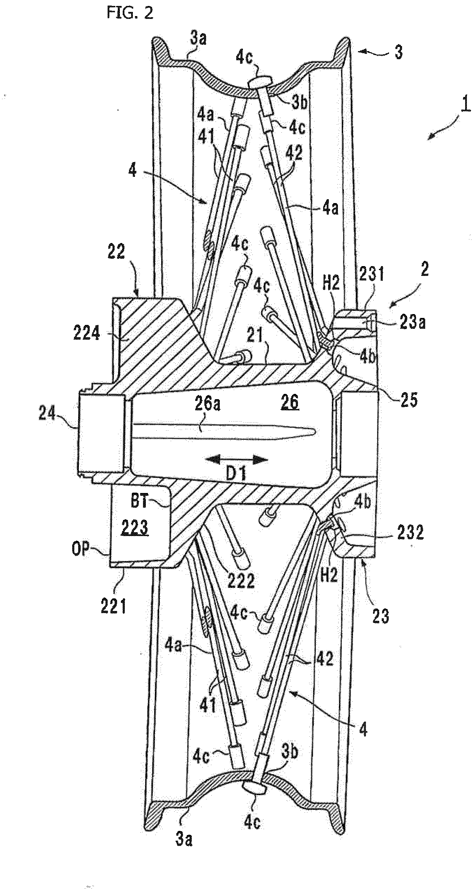

Figs. 1(A) and 1(B) are a first side view and a second side view of a spoke wheel 1 according to an embodiment of the present invention. Fig. 2 is a cross-sectional view of the spoke wheel 1 taken along the line I-I in Fig. 1(A). The spoke wheel 1 is a wheel constituting the driving wheel (rear wheel) of a motorcycle. In the figures, the arrow R indicates the normal direction of rotation of the spoke wheel 1 attached to the motorcycle.

The spoke wheel 1 includes a hub 2, a rim 3, and a plurality of spokes 4 connecting the hub 2 and the rim 3. The hub 2 is a hollow body having an insertion hole 26. The insertion hole 26 is formed to penetrate the centre of the hub 2. An axle shaft (not shown in Fig. 1) to be attached to a rear swing arm of the motorcycle is inserted into the hub 2, and the spoke wheel 1 is rotatably supported by the axle shaft.

The arrow D1 in Fig. 2 indicates the axial direction of the insertion hole 26, and the arrow D2 in Figs. 1(A) and 1(B) indicates the circumferential direction of the insertion hole 26. When the spoke wheel 1 has been attached to the motorcycle, the axial direction D1 is parallel to the lateral direction (transverse direction) of the motorcycle. In the following description, the left-hand side of the hub 2 in Fig. 2 is referred to as a first side, and the right-hand side of the hub 2 in Fig. 2 is referred to as a second side.

A rib 26a is formed on the hub 2 at an inner circumferential surface defining the insertion hole 26. The rib 26a projects toward the centre in the insertion hole 26 and extends in the axial direction D1. The rib 26a is formed so that its amount of projection decreases as it goes from the first side toward the second side of the hub 2, by which the rigidity on the first side is increased while also achieving weight reduction of the hub 2. As will be explained later, the rigidity on the first side of the hub 2 is increased since the first side of the hub 2 receives the driving force from the engine.

The rim 3 is a ring arranged concentrically with the hub 2. A tyre (not shown) is attached to an outer circumferential surface 3a of the rim 3. In the rim 3, a plurality of connection holes 3b to be used for attaching the spokes 4 are formed to penetrate the rim 3 in its thickness direction (radially).

Each spoke 4 has a body 4a of a linear shape and a head 4b on one end of the body 4a. The body 4a is formed from a wire rod. The head 4b may for example be formed by bending and flattening one end of the body 4a. The head 4b engages with the hub 2. The structure will be explained later.

A screw is formed on the other end of the body 4a. The screw on the body 4a is screwed into a screw hole of a nipple 4c inserted into the connection hole 3b. By rotating the nipple 4c, the amount of screwing in the screw can be adjusted and the length between the hub 2 and the rim 3 can be adjusted.

The spokes 4 are generally divided into first spokes 41 extending from the first side of the hub 2 to the rim 3 and second spokes 42 extending from the second side of the hub 2 to the rim 3.

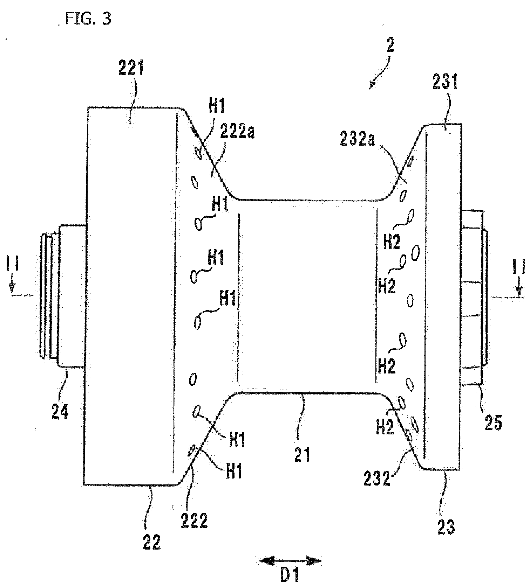

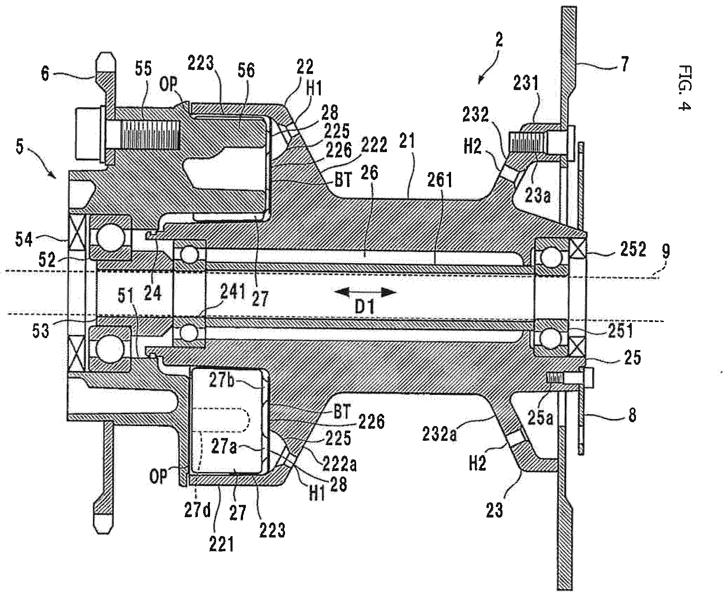

The structure of the hub 2 will be described in detail below. Fig. 3 is an external view of the hub 2. Fig. 4 is a cross-sectional view of the hub 2 taken along the line II-II in Fig. 3, and also shows parts attached to the hub 2.

The hub 2 includes a central part 21, a housing part 22, a disk mounting part 23, an inner cylinder part 24 and a mounting part 25. The housing part 22 houses damper members 27 which will be explained later. To the disk mounting part 23, a brake disk 7 (which will be explained later) is fixed. To the mounting part 25, a pulser ring 8 (which will be explained later) is fixed.

The central part 21 is situated between the housing part 22 and the disk mounting part 23 in the axial direction D1. The housing part 22 is formed on the first side of the hub 2 in the axial direction D1, while the disk mounting part 23 is formed on the second side of the hub 2 in the axial direction D1. Each of the central part 21, the housing part 22 and the disk mounting part 23 is a hollow body penetrated by the insertion hole 26. The outer diameter of the central part 21 is smaller than that of the housing part 22 and that of the disk mounting part 23. The outer diameter of the housing part 22 is larger than that of the disk mounting part 23. However, the outer diameter of the housing part 22 may be equal to or smaller than that of the disk mounting part 23. It is sufficient if only the cross-sectional area of the central part 21 is smaller than the projected cross-sectional areas of the housing part 22 and the disk mounting part 23, irrespective of the specific magnitude relationship among the diameters.

The housing part 22 includes a damper-side peripheral wall part 221 that is concentric with the insertion hole 26 and a damper-side wall part 222 that extends from the damper-side peripheral wall part 221 to the central part 21. The damper-side peripheral wall part 221 has a cylindrical shape. An external surface of the damper-side wall part 222 forms a damper-side tapered surface 222a whose diameter increases from the central part 21 toward the first side of the hub 2. While the external surface of the damper-side wall part 222 may be a surface orthogonal to the axial direction D1, forming the external surface in a tapered shape as in this embodiment makes it easy to secure a maintenance space in the vicinity of the central part 21. Further, the weight of the hub 2 may be reduced while also securing high rigidity of the hub 2. Furthermore, the bend of the head 4b with respect to the body 4a of the first spoke 41 can be reduced, and thus enhancement of the strength of the spokes 4 can also be achieved.

The disk mounting part 23 includes a disk-side peripheral wall part 231 that is concentric with the insertion hole 26 and a disk-side wall part 232 that extends from the disk-side peripheral wall part 231 to the central part 21. The disk-side peripheral wall part 231 has a cylindrical shape. An end face of the disk-side peripheral wall part 231 on the second side is provided with a plurality of screw holes 23a arranged in the circumferential direction (five screw holes 23a in this example, as shown in Fig. 1(B)). On the end face of the disk-side peripheral wall part 231 on the second side, the brake disk 7 is fixed to the disk mounting part 23 by screwing bolts into the screw holes 23a. The brake disk 7 is a disk concentric with the insertion hole 26. Braking force works on the spoke wheel 1 when the brake disk 7 is pinched by pads of a brake caliper (not shown).

The external surface of the disk-side wall part 232 forms a disk-side tapered surface 232a whose diameter increases from the central part 21 toward the second side of the hub 2.

While the external surface of the disk-side wall part 232 may be a surface orthogonal to the axial direction D1, forming the external surface as the disk-side tapered surface 232a as in this embodiment makes it easy to secure a maintenance space in the vicinity of the central part 21. Further, the weight of the hub 2 can be reduced while securing high rigidity of the hub 2. Especially in this embodiment, in which the damper-side wall part 222 and the disk-side wall part 232 form the damper-side tapered surface 222a and the disk-side tapered surface 232a tilting reversely to each other across the central part 21, a larger maintenance space in the vicinity of the central part 21 can be secured. Furthermore, the bend of the head 4b with respect to the body 4a of the second spoke 42 can be reduced, and thus enhancement of the strength of the spokes 4 can also be achieved.

The mounting part 25 is situated inside the disk mounting part 23 and has a cylindrical shape. A peripheral surface of the mounting part 25 is provided with a plurality of boss parts each having a screw hole 25a (five boss parts in this example, as shown in Fig. 1(B)). The pulser ring 8 is fixed to an end face of the mounting part 25 by screwing bolts into the screw holes 25a. The pulser ring 8 is a disk having a number of slits arranged in the circumferential direction. The rotational speed of the spoke wheel 1 is detected by sensing the slits with a rotational speed sensor (not shown).

The inner cylinder part 24 is arranged inside the housing part 22. The insertion hole 26 is formed to extend across the inner cylinder part 24, the central part 21 and the mounting part 25. Ball bearings 241 and 251 are attached to inner circumferential surfaces of the inner cylinder part 24 and the mounting part 25. Provided between inner races of the ball bearings 241 and 251 is a sleeve 261 in a cylindrical shape surrounding the axle shaft 9, schematically illustrated in Fig. 4, by which the hub 2 is supported to be freely rotatable with respect to the axle shaft 9. An end of the mounting part 25 is provided with a seal member 252.

A transmission member 5 is connected to the first side of the hub 2, and a sprocket 6 is fixed to the transmission member 5. The driving force from the engine of the motorcycle is transmitted to the sprocket 6 via a transmission and a chain. The transmission member 5 is a rotary member having a through hole 51 formed at its centre so as to be coaxial with the insertion hole 26. A ball bearing 52 is mounted in the through hole 51. Provided between inner races of the ball bearings 241 and 52 is a spacer 53 in a cylindrical shape surrounding the axle shaft 9, by which the transmission member 5 is supported to be freely rotatable with respect to the axle shaft 9. An end of the through hole 51 is provided with a seal member 54.

The transmission member 5 includes a plurality of transmitting parts 56 arranged in the circumferential direction and projecting inside the housing part 22 of the hub 2. The transmitting parts 56 transmit the driving force to the hub 2 via the damper members 27 such as damper rubbers.

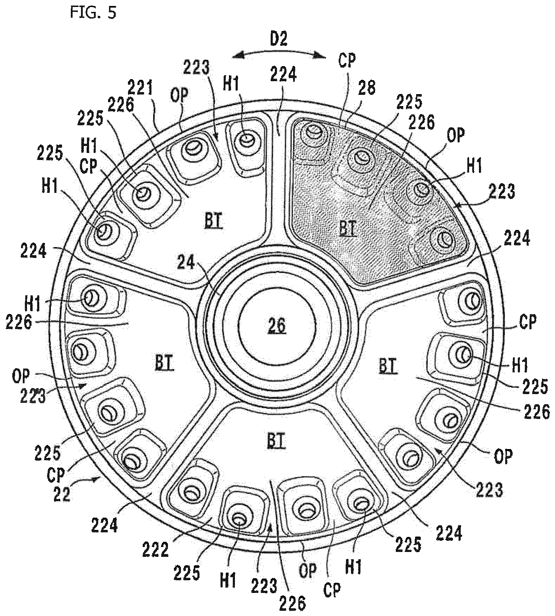

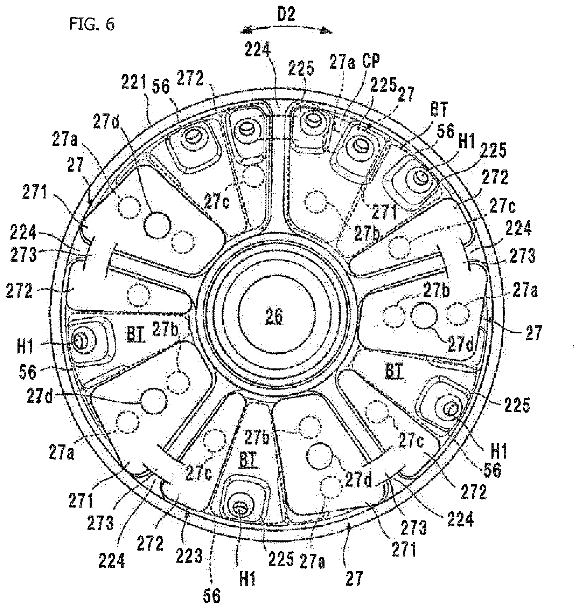

The structure of the hub 2 and a driving force transmission structure will be explained below by referring to Figs. 5 and 6. Fig. 5 is a side view of the first side of the hub 2. Fig. 6 is a side view of the first side of the hub 2 equipped with the damper members 27.

As shown in Fig. 5, the housing part 22 is formed to surround the insertion hole 26. Inside the housing part 22, housing rooms 223 are formed by partitioning the housing part 22 with a plurality of partition walls 224. In this embodiment, five housing rooms 223 are formed. Each partition wall 224, extending in the radial direction of the insertion hole 26, is connected to the inner cylinder part 24, the damper-side peripheral wall part 221 and the damper-side wall part 222. Each housing room 223, having a fan-like external form, is a depressed part that is recessed in the axial direction D1. On the first side, the housing room 223 has an opening part OP that is open to allow the damper members 27 to be put in and out. The housing room 223 also has a bottom surface BT formed to be recessed from the opening part OP in the axial direction D1. The bottom surface BT is formed by the damper-side wall part 222.

As shown in Fig. 6, each damper member 27 includes a drive-side damper member 271, a back-side damper member 272, and a connection part 273 connecting these members together. The drive-side damper member 271 and the back-side damper member 272 are arranged on both sides of the partition wall 224 to sandwich the partition wall 224. The connection part 273 connects the drive-side damper member 271 and the back-side damper member 272 together across the partition wall 224. Each of the drive-side damper member 271 and the back-side damper member 272 has an external form in conformity with the outline of the housing room 223 and is closely housed in the vicinity of the partition wall 224 between adjacent housing rooms 223.

Leg parts 27a to 27c are provided as projections on a surface of the damper member 27 on the bottom surface BT side. The leg parts 27a and 27b are formed on the drive-side damper member 271 to be separate from each other in the radial direction of the insertion hole 26. The leg part 27c is formed on the back-side damper member 272 to be situated in a central part of the back-side damper member 272 in the radial direction of the insertion hole. The drive-side damper member 271 has a bottomed hole 27d formed to allow the drive-side damper member 271 to deform appropriately.

As shown in Fig. 4, the transmission member 5 is arranged to cover the housing rooms 223. As shown in Fig. 6, the transmitting parts 56 are arranged at prescribed intervals in the circumferential direction D2 and are inserted between adjacent damper members 27. The driving force inputted to the sprocket 6 is transmitted from the transmitting parts 56 to the partition walls 224 via the damper members 27 and rotates the hub 2. During acceleration, the driving force is transmitted via the drive-side damper members 271. During deceleration, the driving force is transmitted via the back-side damper members 272. In either case, the shocks at times of acceleration or deceleration are mitigated.

Next, locking structures for the heads 4b of the spokes 4 will be described below. First, a locking structure for the heads 4b of the first spokes 41 that is formed in the damper-side wall part 222 will be described. As shown in Fig. 5, the bottom surface BT includes a flat surface 226 and depressed parts 225 that are recessed from the flat surface 226 in the axial direction D1. A plurality of depressed parts 225 are formed along the damper-side peripheral wall part 221 in a radially outer part of the bottom surface BT. In the example of Fig. 5, four depressed parts 225 are formed in each housing room 223.

On the bottom surface BT, a plurality of through holes H1, for the first spokes 41 to be inserted therein, are arranged in the circumferential direction D2. Each depressed part 225 has one through hole H1 formed therein. As shown in Fig. 4, the through hole H1 extends from the bottom surface of the depressed part 225 in a direction substantially orthogonal to the damper-side tapered surface 222a of the damper-side wall part 222 and penetrates the damper-side wall part 222. The head 4b of the first spoke 41 is housed in the depressed part 225. The head 4b is of such a size that it cannot pass through the through hole H1, and thereby engages with the depressed part 225.

In Fig. 6, the damper member 27 situated at the position of twelve o'clock is indicated by broken lines as a transparent view to illustrate the positional relationship among the leg parts 27a to 27c and the depressed parts 225. The leg parts 27b and 27c are situated radially inside of the depressed parts 225, and are supported on the flat surface 226 to be in contact with the flat surface 226 via a partition member 28. The leg part 27a is supported to be in contact with a position regulation part CP, which is formed between adjacent depressed parts 225, via the partition member 28. The position regulation part CP is a part on the same plane as the flat surface 226 of the bottom surface BT and on the same plane as the positions where the leg parts 27b and 27c are supported. By having the leg part 27a supported on the position regulation part CP, position regulation of the damper member 27 in the axial direction can be carried out and the falling over of the damper member 27 can be prevented.

Since the through hole H1 is a part connecting to the outside of the hub 2, foreign matter such as dust can enter the housing room 223 via the through hole H1. Thus, the partition member 28 may be provided between the damper member 27 and the depressed parts 225 as shown in Fig. 4. By covering the depressed parts 225 with the partition member 28, entry of the foreign matter can be inhibited and high durability of the damper member 27 can be maintained.

The partition member 28 may for example be a metallic plate-shaped member. In Fig. 5, an example of the partition member 28 is shown as a transparent view in the housing room 223 situated generally at the position from twelve o'clock to two o'clock. The partition member 28 is also provided in the other housing rooms 223 in the same way. The partition member 28 in Fig. 5 is assumed to have an external form in conformity with the outline of the bottom surface BT of the housing room 223 and to cover the entire bottom surface BT. With this configuration, the leg parts 27a to 27c of the damper member 27 are set in contact with the bottom surface BT via the same flat plane of the partition member 28.

Next, a locking structure for the heads 4b of the second spokes 42 will be described. As shown in Fig. 2, the head 4b is locked to the disk-side wall part 232 of the disk mounting part 23. The disk-side wall part 232 is provided with a plurality of through holes H2 arranged in the circumferential direction to allow the second spokes 42 to be inserted therein. Each through hole H2 extends from an inner surface of the disk-side wall part 232 in a direction substantially orthogonal to the disk-side tapered surface 232a and penetrates the disk-side wall part 232. The head 4b of the second spoke 42 has such a size that it cannot pass through the through hole H2 and thereby engages with the disk-side wall part 232.

By forming the through holes H1 and H2 on the damper-side tapered surface 222a and the disk-side tapered surface 232a opposing each other, the radial distance from the centre of the insertion hole 26 to the through hole H1 and the radial distance from the centre of the insertion hole 26 to the through hole H2 can be set substantially equal to each other and the total lengths of the first spoke 41 and the second spoke 42 can be made substantially equal to each other.

Further, the first spokes 41 are connected from the damper-side tapered surface 222a to the rim 3 while leaning toward the second side, and the second spokes 42 are connected from the disk-side tapered surface 232a to the rim 3 while leaning toward the first side. Since the distance between the external surface of the hub 2 and the first spokes 41 or the distance between the external surface of the hub 2 and the second spokes 42 is made longer, the maintainability in the vicinity of the hub 2 can be improved while also facilitating visual recognition of the spokes 4 and improving the external appearance.

As described above, in this embodiment, the damper members 27 and the heads 4b of the first spokes 41 are arranged side by side in the axial direction D1 and the heads 4b of the first spokes 41 can be positioned on the axle shaft 9 side rather than the outer periphery. Thus, the downsizing and weight reduction of the hub 2 can be achieved compared to a configuration in which a locking part for the heads 4b is stood on the damper-side peripheral wall part 221, for example. Further, since the heads 4b of the first spokes 41 are locked to the housing part 22 having relatively high rigidity and receiving the driving force transmission, high mounting rigidity of the first spokes 41 can be secured while achieving the weight reduction of the hub 2 by using the depressed parts 225 as thinned parts.

By supporting the leg part 27a of the damper member 27 on the position regulation part CP, the damper member 27 can be positioned more consistently in the axial direction D1 with respect to the bottom surface BT and the falling over of the damper member 27 toward a depressed part 225 can be prevented. Further, the position regulation part CP functions as a rib formed between adjacent depressed parts 225, and thus the housing part 22 can be reinforced while reducing the weight by the thinning.

Since the second spokes 42 are locked to the disk-side wall part 232 opposing the damper-side wall part 222, the first spokes 41 and the second spokes 42 can be arranged symmetrically in the axial direction D1, by which the maintainability and the external appearance can be improved.

## Claims

1. A spoke wheel (1) for a motorcycle, comprising:
a hub (2) having an insertion hole (26) for an axle shaft (9) to be inserted therein;
a rim (3) for a tyre to be attached thereto; and
a plurality of spokes (4) connecting the hub (2) and the rim (3), wherein the spokes (4) include
first spokes (41) extending from a first side of the hub (2) in an axial direction (D1) of the insertion hole (26) to the rim (3), and
second spokes (42) extending from a second side of the hub (2) in the axial direction (D1) to the rim (3),
wherein a housing part (22) housing damper members (27) is formed on the first side of the hub (2) to surround the insertion hole (26), the housing part (22) including
an opening part (OP) open to the first side,
a bottom surface (BT) formed to be recessed from the opening part (OP) in the axial direction (D1), and
a damper-side wall part (222) forming the bottom surface (BT), **characterized in that** the bottom surface (BT) includes
a flat surface (226),
depressed parts (225) recessed from the flat surface (226) in the axial direction (D1) to house heads (4b) of the first spokes (41), and
through holes (H1) formed in the depressed parts (225) to allow the first spokes (41) to be inserted therein.

2. The spoke wheel according to claim 1, wherein
a position regulation part (CP) for regulating a position of the damper member (27) is formed between adjacent ones of the depressed parts (225), and
the position regulation part (CP) is on the same plane as the flat surface (226).

3. The spoke wheel according to claim 1 or 2, wherein
the hub (2) includes
a disk mounting part (23) formed on the second side to allow a brake disk (7) to be fixed thereto and
a central part (21) situated between the housing part (22) and the disk mounting part (23),
wherein an external surface of the damper-side wall part (222) forms a damper-side tapered surface (222a) whose diameter increases from the central part (21) toward the first side,
wherein an external surface of the disk mounting part (23) includes a disk-side tapered surface (232a) whose diameter increases from the central part (21) toward the second side, and
wherein through holes (H2) for the second spokes (42) to be inserted therein are formed through the disk-side tapered surface (232a).

4. The spoke wheel according to claim 3, wherein
the first spokes (41) are connected from the damper-side tapered surface (222a) to the rim (3) while leaning toward the second side, and
the second spokes (42) are connected from the disk-side tapered surface (232a) to the rim (3) while leaning toward the first side.

5. The spoke wheel according to any one of claims 1 to 4, further comprising partition members (28) provided between the depressed parts (225) and the damper members (27).

## Patentansprüche

1. Speichenrad (1) für ein Motorrad, umfassend:
eine Nabe (2) aufweisend eine Einsetzöffnung (26) für eine Achswelle (9), die darin eingesetzt werden soll;
eine Felge (3) für einen Reifen, der daran befestigt werden soll; und
eine Vielzahl von Speichen (4), die die Nabe (2) und die Felge (3) verbinden, wobei die Speichen (4) einschließen
erste Speichen (41), die sich von einer ersten Seite der Nabe (2) in einer axialen Richtung (D1) der Einsetzöffnung (26) zur Felge (3) hin erstrecken, und
zweite Speichen (42), die sich von einer zweiten Seite der Nabe (2) in der axialen Richtung (D1) zur Felge (3) hin erstrecken,
wobei ein Gehäuseteil (22), das Dämpferelemente (27) aufnimmt, auf der ersten Seite der Nabe (2) gebildet ist, um die Einsetzöffnung (26) zu umgeben, wobei das Gehäuseteil (22) einschließt
ein Öffnungsteil (OP), das zur ersten Seite hin offen ist,
eine Bodenfläche (BT), die gebildet ist, um von dem Öffnungsteil (OP) in der axialen Richtung (D1) ausgespart zu sein, und
ein dämpferseitiges Wandteil (222), das die Bodenfläche (BT) bildet,
**dadurch gekennzeichnet, dass** die Bodenfläche (BT) einschließt
eine ebene Fläche (226),
vertiefte Teile (225), die von der ebenen Fläche (226) in der axialen Richtung (D1) ausgespart sind, um Köpfe (4b) der ersten Speichen (41) aufzunehmen, und
Durchgangsöffnungen (H1), die in den vertieften Teilen (225) gebildet sind, um das Einsetzen der ersten Speichen (41) in diese zu ermöglichen.

2. Speichenrad nach Anspruch 1, wobei
ein Positionsregelungsteil (CP) zum Regeln einer Position des Dämpferelements (27) zwischen benachbarten der vertieften Teile (225) gebildet ist, und
sich das Positionsregelungsteil (CP) auf der gleichen Ebene wie die ebene Fläche (226) befindet.

3. Speichenrad nach Anspruch 1 oder 2, wobei
die Nabe (2) einschließt
ein Scheibenbefestigungsteil (23), das auf der zweiten Seite so gebildet ist, dass eine Bremsscheibe (7) daran befestigt werden kann, und
ein Mittelteil (21), das zwischen dem Gehäuseteil (22) und dem Scheibenbefestigungsteil (23) angeordnet ist,
wobei eine Außenfläche des dämpferseitigen Wandteils (222) eine dämpferseitige Schrägfläche (222a) bildet, deren Durchmesser vom Mittelteil (21) zu der ersten Seite hin zunimmt,
wobei eine Außenfläche des Scheibenbefestigungsteils (23) eine scheibenseitige Schrägfläche (232a) einschließt, deren Durchmesser vom Mittelteil (21) zu der zweiten Seite hin zunimmt, und
wobei Durchgangsöffnungen (H2) für die darin einzusetzenden zweiten Speichen (42) durch die scheibenseitige Schrägfläche (232a) gebildet sind.

4. Speichenrad nach Anspruch 3, wobei
die ersten Speichen (41) von der dämpferseitigen Schrägfläche (222a) mit der Felge (3) verbunden sind und sich gleichzeitig zur zweiten Seite hin neigen, und
die zweiten Speichen (42) von der scheibenseitigen Schrägfläche (232a) mit der Felge (3) verbunden sind und sich gleichzeitig zur ersten Seite hin neigen.

5. Speichenrad nach einem der Ansprüche 1 bis 4, weiter umfassend Trennelemente (28), die zwischen den vertieften Teilen (225) und den Dämpferelementen (27) bereitgestellt sind.

## Revendications

1. Roue à rayons (1) pour une motocyclette, comprenant :
un moyeu (2) ayant un trou d'insertion (26) pour un arbre d'essieu (9) devant être inséré dans celui-ci;
une jante (3) pour un pneu devant être attachée à celui-ci; et
une pluralité de rayons (4) reliant le moyeu (2) et la jante (3), dans laquelle les rayons (4) incluent
des premiers rayons (41) s'étendant d'un premier côté du moyeu (2) dans une direction axiale (D1) du trou d'insertion (26) vers la jante (3), et
des seconds rayons (42) s'étendant d'un second côté du moyeu (2) dans la direction axiale (D1) vers la jante (3),
dans laquelle une partie de logement (22) logeant des éléments amortisseurs (27) est formée sur le premier côté du moyeu (2) pour entourer le trou d'insertion (26), la partie de logement (22) incluant
une partie d'ouverture (OP) ouverte vers le premier côté,
une surface inférieure (BT) formée pour être en retrait par rapport à la partie d'ouverture (OP) dans la direction axiale (D1), et
une partie de paroi côté amortisseur (222) formant la surface inférieure (BT),
**caractérisée en ce que** la surface inférieure (BT) inclut
une surface plate (226),
des parties en creux (225) en retrait par rapport à la surface plate (226) dans la direction axiale (D1) pour loger des têtes (4b) des premiers rayons (41), et
des trous traversants (H1) formés dans les parties en creux (225) pour permettre aux premiers rayons (41) d'être insérés dans ceux-ci.

2. Roue à rayons selon la revendication 1, dans laquelle
une partie de réglage de position (CP) pour régler une position de l'élément amortisseur (27) est formée entre certaines adjacentes des parties en creux (225), et
la partie de réglage de position (CP) est sur le même plan que la surface plate (226).

3. Roue à rayons selon la revendication 1 ou 2, dans laquelle le moyeu (2) inclut
une partie de montage de disque (23) formée sur le second côté pour permettre à un disque de frein (7) d'être fixé à celle-ci, et
une partie centrale (21) située entre la partie de logement (22) et la partie de montage de disque (23),
dans laquelle une surface externe de la partie de paroi côté amortisseur (222) forme une surface effilée côté amortisseur (222a) dont le diamètre augmente de la partie centrale (21) vers le premier côté,
dans laquelle une surface externe de la partie de montage de disque (23) inclut une surface effilée côté disque (232a) dont le diamètre augmente de la partie centrale (21) vers le second côté, et
dans laquelle des trous traversants (H2) pour que les seconds rayons (42) s'insèrent dans ceux-ci sont formés à travers la surface effilée côté disque (232a).

4. Roue à rayons selon la revendication 3, dans laquelle
les premiers rayons (41) sont reliés de la surface effilée côté amortisseur (222a) à la jante (3) tout en s'inclinant vers le second côté, et
les seconds rayons (42) sont reliés de la surface effilée côté disque (232a) à la jante (3) tout en s'inclinant vers le premier côté.

5. Roue à rayons selon l'une quelconque des revendications 1 à 4, comprenant en outre des éléments formant cloisons (28) prévus entre les parties en creux (225) et les éléments amortisseurs (27).
